Europäisches Patentamt

European Patent Office

Office européen des brevets

(11) Publication number: **0 434 159 A1**

## EUROPEAN PATENT APPLICATION

(21) Application number: **90203357.0**

(22) Date of filing: **14.12.90**

(51) Int. Cl.⁵: **C05F 17/02**, //A01G1/04

(30) Priority: **14.12.89 NL 8903072**

(43) Date of publication of application:
**26.06.91 Bulletin 91/26**

(84) Designated Contracting States:
**AT BE CH DE DK ES FR GB GR IT LI LU NL SE**

(71) Applicant: **INTERCHAMP B.V.**
**Massenweg 4a**
**NL-5962 NE Melderslo(NL)**

(72) Inventor: **Smeets, Jacobus Gerardus Maria**
**Ninnesweg 72**
**5981 PC Helden-Panningen(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Tunnel system for the preparation of compost.

(57) In a tunnel system for the preparation of a ready nutrient base, in particular ready compost for growing edible mushrooms, from a starting material, for example fresh compost, provision is made for at least one tunnel with an air-permeable floor on which the compost can be accommodated, under which floor a supply duct for air to be conveyed through the compost is provided, in which one end of the supply duct can be supplied with air by means of a fan. A main supply duct is provided at right angles to the lengthwise direction of the tunnel at the side where the fan is situated, the main supply duct and the fan extending upwards to no more than approximately the level of the permeable floor. Also, a main discharge duct is provided at right angles to the lengthwise direction of the tunnel at the side where the fan is situated, the main discharge duct extending upwards to no more than approximately the level of the permeable floor.

EP 0 434 159 A1

Xerox Copy Centre

# TUNNEL SYSTEM FOR THE PREPARATION OF COMPOST

The invention relates to a tunnel system for the preparation of a ready nutrient base, in particular ready compost for growing edible mushrooms, from a starting material, for example fresh compost, provided with at least one tunnel with an air-permeable floor on which the compost can be accommodated, under which floor a supply duct for air to be conveyed through the compost is provided, in which one end of the supply duct can be supplied with air by means of a fan, the top part of each tunnel forms a discharge duct for air coming out of the compost, and one end or both ends of each tunnel can be shut off by an airtight door. Such a tunnel system is generally known for the preparation of compost for, for example, mushroom growing. This compost can then be used as a raw material for mushroom growers. The tunnel systems can in this case generally supply ready compost of two different kinds, namely compost which is pasteurized and inoculated and requires a processing time of approximately one week, and colonized compost in which mycelium has already formed, and requires a processing time of approximately three weeks.

The main microbiological conversions taking place in the compost in the tunnel system are the conversion and absorption of ammonia nitrogen in the microflora in the compost, the destruction of pathogenic bacteria, the lowering of the ammonia content, and the decomposition of organic matter so that it can be absorbed by the mushrooms.

The fresh compost is brought in through the ends of the tunnel which can be shut off by airtight doors, and the ready compost is removed again after processing. It is known here to provide the grid floor with a movable mat onto which the fresh compost is emptied. The ready compost can be removed again from the tunnel using such a mat. During the microbiological and physical process the doors are shut, in order to control the climate in the tunnels. The climate in a tunnel varies depending on the stage which the preparation process has reached, and can be controlled by circulation and external ventilation of air through the compost heap, through the addition of heat and steam.

In the case of the known tunnel systems the air circulation is obtained by a fan which is generally erected in the hall into which the tunnels open, and into which the compost is discharged. The problem here is that the fan and the connecting ducts for the air circulation generally constitute a troublesome obstruction when the tunnel is being emptied; the fan therefore has to be such that it can be disconnected and removed. This is, of course, a time-consuming business, which has to be carried out each time the tunnel is being emptied.

According to another embodiment, it is known to place the fan on the roof of the tunnel in question. This embodiment also has certain disadvantages; for example, the air coming out of the discharge duct must be forced downwards through the tunnel space in the direction of the air supply duct. This means that in the tunnel, at the head end where the fan is situated, provision must be made for an airtight space which is suitable for conveying the air to the supply duct and preventing the air from flowing back to the discharge duct. Such fans placed on the roof of the tunnel also constitute a considerable noise nuisance for the environment, while in addition the maintenance of the fans gives rise to problems, on account of their poor accessibility.

The object of the invention is therefore to provide a tunnel system of the type mentioned in the preamble which does not have these disadvantages. This object is achieved in that a main supply duct is provided at right angles to the lengthwise direction of the tunnel at the side where the fan is situated, the main supply duct and the fan extending upwards to no more than approximately the level of the permeable floor. The hall space near the airtight door is now entirely free, since the main supply duct and the fan are at a lower level, for example at the level of the supply duct. This means that the tunnel can be emptied easily without being hampered by the main supply duct or the fan having to be removed or cables having to be disconnected. The sound produced by the fan is now also effectively damped by the adjoining parts of the building.

The air coming out of the compost can be discharged in different ways. Preferably, a main discharge duct is provided at right angles to the lengthwise direction of the tunnel at the side where the fan is situated, the main discharge duct extending upwards to no more than approximately the level of the permeable floor. In this way the main discharge duct does not interfere with the emptying of charging of the tunnel either.

According to the invention the discharge can take place in an advantageous manner if at the end of the tunnel facing the fan provision is made for a removable end partition which ends at a distance from the top side of the duct and is situated at a distance from the corresponding door, in such a way that the air discharged from the compost can leave the tunnel through the space between end partition and said door via a discharge line which is connected to said space and opens out essentially at the same level as the supply duct and the fan.

The same pressure now prevails in the space between the end partition and the door as in the discharge duct above the compost, so that no separate pressure seal for the end partition need be provided, as in the case of the state of the art described above, where the fans are placed on the roof. The end partition can be taken away while the tunnel is being emptied.

Where they run at the same level, the supply duct and the discharge line lie next to each other in the transverse direction of the tunnel. Provision is preferably made here for the discharge line to be split into two discharge line parts, for the supply line to run between the two discharge line parts below the level determined by the permeable floor, and for the fan to be situated directly in front of the supply duct. The air discharged from the compost and coming out of the space between the end partition and the door is now distributed over these two discharge line parts, as a result of which a perfect outflow of the air is ensured.

In the case of the tunnel systems of the above-mentioned type it is known to provide a main supply duct and a main discharge duct at right angles to the lengthwise direction of the tunnel at the side where the fan is situated. According to the invention, a particularly advantageous embodiment is obtained if the main supply duct and the main discharge duct extend upwards to no more than approximately the level of the permeable floor. This can be achieved, inter alia, through the top limit of the main supply duct and the main discharge duct being formed by the floor of the hall into which the corresponding airtight door opens. In that case the main supply duct and the main discharge duct can be made a part of the foundation of the above-mentioned hall.

It is particularly simple now to connect one discharge line part in each case to the main discharge duct, since both the discharge line part and the main discharge duct are running at more or less the same level. Provision is preferably made for the other discharge line part to be connected to the inlet of the fan. A part of the air coming out of the compost can thus be circulated through the compost again, so that it can be ensured that the desired temperature is maintained in the compost.

The inlet of the fan is connected by means of a branch line to the main supply duct. This is achieved according to the invention in that the one discharge line part in each case and the branch line are connected by their own valve register to an inlet chamber for the fan. An air mixture of the desired temperature can thus be fed to the compost by controlling the valve registers in the desired way. In order to control the flow of the infed and the discharged air, the other discharge line part can also be connected to the main discharge duct by means of a valve register.

According to a preferred embodiment, provision is made under the floor of the hall for three spaces running at right angles to the lengthwise direction of the tunnel, of which, going from the tunnel, the first space provides room for the supply duct, the discharge line parts, the fan and the valve registers, the second space forms the main supply duct, and the third space forms the main discharge duct. The first space provides a good access to the system, such as the supply line, discharge line parts and fan, and also the valve registers. This means that maintenance can be carried out in a simple manner on these elements of the tunnel system. To this end, these elements are preferably situated in the top side of said space, so that personnel can walk through underneath in order to gain access to the adjacent elements of different tunnels.

Provision can also be made in the known manner for the air flowing through the discharge duct to be sprinkled, in such a way that ammonia discharged from the compost and contained in the air is removed. The ammonia thus obtained is taken to a chemical washing plant through which the air is passed. The removal of ammonia from the air to be discharged has been made compulsory from the point of view of the environment. The removal of ammonia must be carried out efficiently here in all circumstances.

Sprinkling the air to be discharged in the main discharge duct, with the possibility of acidifying the water, means that the air essentially undergoes an extensive pre-washing.

In this way an increase in the purification efficiency of air is achieved in normal operating conditions, and effective air purification is also guaranteed in exceptional operating conditions, in the event of a fault in the chemical washer.

From the environmental hygiene point of view, this part of the invention means a guarantee of the continuity of the device as a whole.

These processes take place in the space under the floor of the above-mentioned hall. That is a relatively safe place, where any escaping vapours can easily be interrupted. The liquids can also be contained relatively easily in the concrete casing of such a cellar-type space. A further advantage which can be mentioned is that the fans are also all situated in the space under the hall, as a result of which their noise nuisance for the environment is considerably reduced.

The tunnel system can further be improved when the cross-sectional dimensions of each duct are selected in such a way that the speed of the air being fed to or emanating form each tunnel through said duct is low enough for an efficient treatment of said air.

The invention will be explained in greater detail below with reference to an example of an embodiment shown in the figures.

Finally, it is mentioned that the tunnel system described before is also suitable for the preparation of compost from waste-products such as vegetable- and garden-waste.

Figure 1 shows a cross-section through a tunnel system according to the invention.

Figure 2 shows a top view, partially in cross-section, of the tunnel system according to Figure 1.

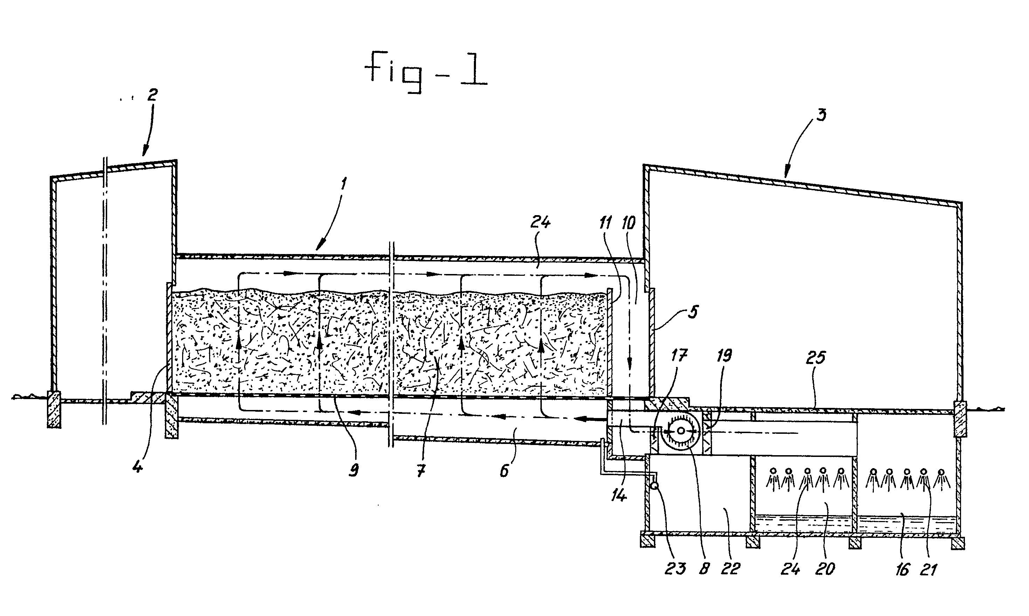

The tunnel system shown in Figure 1 for the preparation of compost comprises a tunnel 1, a hall 2 from which the fresh compost is fed into the tunnel 1, and a hall 3 into which the ready compost is discharged. These rooms are interconnected by means of pressure-tight doors 4, 5. The floor of the tunnel 1 is formed by a grid floor 9, on which a mat (not shown) is fitted in a known manner. The compost can be taken in a known manner from the hall 2 into the tunnel. An air supply duct 6 lies under the grid floor 9, while the space above the compost 7 forms an air discharge duct 24.

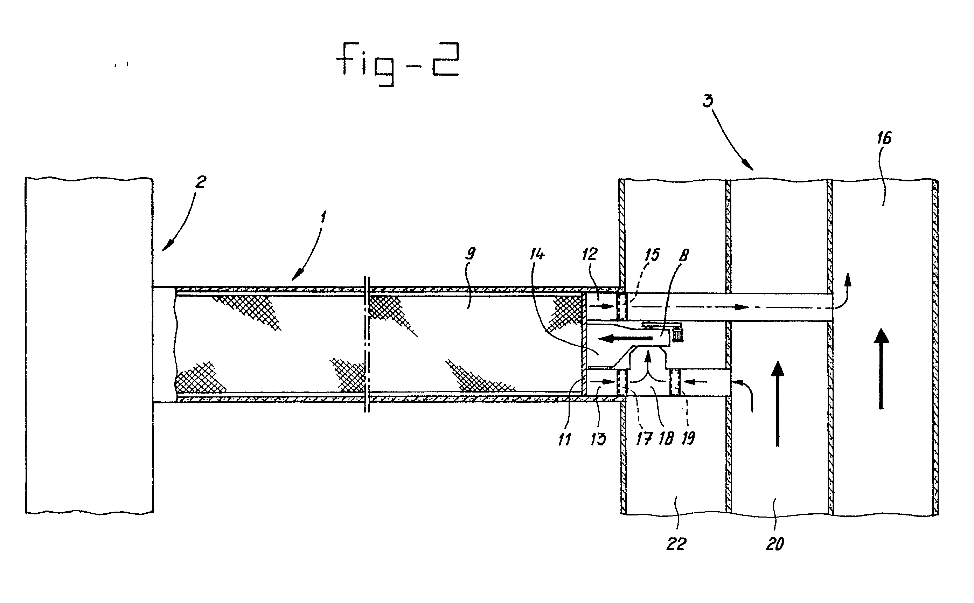

As shown, a fan 8 is placed at one end of the supply duct 6, by means of which the air can be forced into the compost. This fan 8 is situated essentially at the same level as the air supply duct 6, under the floor 25 of the hall 3 into which the tunnel 1 leads. The air coming out of the compost flows, as mentioned, through the discharge duct 7, and the space 10 which is formed between a removable end partition 11, against which the compost lies, and the door 5. At the level of the floor 9 of the tunnel 1 the space 10 divides into two discharge line parts 12, 13, which can be seen better from Figure 2. It can also be seen in this figure that the fan 8 is connected by means of a supply line 14, running between said discharge line parts 12, 13, to the supply duct 6.

It can also be seen from Figure 2 that the discharge line part 12 is connected by means of a valve register 15 to the main discharge duct 16. The air discharged from all tunnels is removed centrally from this main discharge duct 16. The other discharge line part 13 is connected by means of a valve register 17 to a chamber 18 which is connected to the inlet of the fan 8. This chamber 18 is also connected by means of valve register 19 to the main supply duct 20 through which fresh air can be fed in. By regulating the valve registers 15, 17 and 19 in a suitable manner, the air mixture desired for treatment of the compost, made up of air discharged from the compost and fresh air, can be fed in again.

As can also be seen in Figures 1 and 2, the fans and the lines and the valve registers are accommodated in a maintenance space 22, in such a way that all these parts of the tunnel system are readily accessible for maintenance. Figure 1 also shows that the bottom of the supply duct 6 is also connected to a drainage pipe 23, in order to remove liquids seeping out of the compost.

A sprinkling system 24 is also provided in the main supply duct 20, by means of which system the infed air can be pretreated in order to obtain the desired air conditions such as air humidity and temperature. A sprinkling system 21 is fitted in the main discharge duct 16, by means of which system the ammonia-containing air discharged from the compost can be pretreated with acidified water. The air thus pretreated can then be conveyed through a known washing device (not shown) before escaping into the atmosphere. Both in the main supply duct 20 and in the main discharge duct 16, the sprinkling liquid can be extracted by, for example, pumps and removed for further treatment, or discharged directly.

## Claims

1. Tunnel system for the preparation of a ready nutrient base, in particular ready compost for growing edible mushrooms from a starting material, for example fresh compost, provided with at least one tunnel with an air-permeable floor on which the compost can be accommodated, under which floor a supply duct for air to be conveyed through the compost is provided, in which one end of the supply duct can be supplied with air by means of a fan, the top part of each tunnel forms a discharge duct for air coming out of the compost, and one end or both ends of each tunnel can be shut off by an airtight door, characterized in that a main supply duct is provided at right angles to the lengthwise direction of the tunnel at the side where the fan is situated, the main supply duct and the fan extending upwards to no more than approximately the level of the permeable floor.

2. Tunnel system according to claim 1, whereby a main discharge duct is provided at right angles to the lengthwise direction of the tunnel at the side where the fan is situated, the main discharge duct extending upwards to no more than approximately the level of the permeable floor.

3. Tunnel system according to Claim 1, in which at the end of the tunnel facing the fan provision is made for a removable end partition which ends at a distance from the top side of the duct and is situated at a distance from the corresponding door, in such a way that the air discharged from the compost can leave the tunnel through the space between the end partition and said door via a discharge line which is connected to said space and opens out essentially at the same level as the supply duct and the fan.

4. Tunnel system according to Claim 3, in which the discharge line is split into two discharge line parts, the supply line runs between the two discharge line parts below the level determined by the permeable floor, and the fan is situated directly in front of the supply duct.

5. Tunnel system according to one or more Claims, in which the top limit of main supply duct and main discharge duct is formed by the floor of a hall into which the airtight door opens.

6. Tunnel system according to Claim 4 or 5, in which one discharge line part in each case is connected to the main discharge duct, and the other discharge line part is connected to the inlet of the fan.

7. Tunnel system according to Claim 6, in which the inlet of the fan is connected by means of a branch line to the main supply duct, and the one discharge line part in each case and the branch line are connected by their own valve register to an inlet chamber for the fan.

8. Tunnel system according to Claim 7, in which the other discharge line part is connected by means of a valve register to the main discharge duct.

9. Tunnel system according to any of the preceding Claims, in which a sprinkling system is situated in the main supply duct for regulating the state of the infed air, such as the humidity or temperature thereof.

10. Tunnel system according to any of the preceding Claims, in which a sprinkling system is situated in the main discharge duct for treatment of the discharged air with acidified water, and a washing plant for the removal of ammonia from the air.

11. Tunnel system according to claim 9 or 10, in which the cross-sectional dimensions of each duct are selected in such a way that the speed of the air being fed to or emanating from each tunnel through said duct is low enough for an efficient treatment of said air.

12. Tunnel system according to any of the preceding Claims, in which provision is made under the floor of the hall for three spaces running at right angles to the lengthwise direction of the tunnel, of which, going from the tunnel, the first space provides room for the supply duct, the discharge line parts, the fan and the valve registers, the second space forms the main supply duct, and the third space forms the main discharge duct.

Fig-1

Fig-2

European
Patent Office

**EUROPEAN SEARCH
REPORT**

Application Number

**EP 90 20 3357**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | NL-A-7 805 993   (D. HENKE)<br>* claims ; figure 1 *<br>— — — | 1 | C 05 F<br>17/02 //<br>A 01 G 1/04 |
| A | NL-A-7 214 210   (AGRIFUNG S.A.S.)<br>* claims *<br>— — — | 1 | |
| A | US-A-4 233 266   (D.A. KUMMER)<br>* claims *<br>— — — | 1 | |
| A | GB-A-1 597 354   (V. STAHLSCHMIDT)<br>* claims ; figures 2, 5 *<br>— — — | 1 | |
| A | DE-C-9 154 36   (H. VON SYBEL)<br>* claims ; figures 1, 2 *<br>— — — — — | 1 | |
| | | | TECHNICAL FIELDS SEARCHED (Int. Cl.5) |
| | | | C 05 F<br>A 01 G<br>F 26 B |

The present search report has been drawn up for all claims

| Place of search | Date of completion of search | Examiner |
|---|---|---|
| The Hague | 02 April 91 | SCHUT,R.J. |

CATEGORY OF CITED DOCUMENTS

X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

&: member of the same patent family, corresponding
    document